# EUROPEAN PATENT SPECIFICATION

(11) **EP 3 598 684 B1**
(45) Date of publication and mention of the grant of the patent: **16.02.2022**
(21) Application number: 18768091.3
(22) Date of filing: 15.03.2018
(51) Int. Cl.: H04L 5/00, H04L 1/00, H04W 72/04, H04B 7/06

(54) **METHOD FOR TRANSMITTING OR RECEIVING SIGNAL IN WIRELESS COMMUNICATION SYSTEM AND APPARATUS THEREFOR**
VERFAHREN ZUM SENDEN ODER EMPFANGEN EINES SIGNALS IN EINEM DRAHTLOSKOMMUNIKATIONSSYSTEM UND VORRICHTUNG DAFÜR
PROCÉDÉ D'ÉMISSION OU DE RÉCEPTION DE SIGNAL DANS UN SYSTÈME DE COMMUNICATION SANS FIL ET APPAREIL ASSOCIÉ

(30) Priority: 15.03.2017 US 201762471921 P
(43) Date of publication of application: 22.01.2020
(73) Proprietor: LG Electronics Inc., Seoul 07336 (KR)
(72) Inventor: JO, Soonki, Seoul 06772 (KR); YI, Yunjung, Seoul 06772 (KR); SEO, Inkwon, Seoul 06772 (KR)
(74) Representative: Frenkel, Matthias Alexander
(86) International application number: PCT/KR2018/003027
(87) International publication number: WO 2018/169318

(56) References cited:
- WO-A1-2017/039737
- HUAWEI ET AL: "Search space design aspects", 3GPP DRAFT; R1-1701640, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 6 February 2017 (2017-02-06), XP051220523, Retrieved from the Internet: URL:http://www.3gpp.org/ftp/tsg_ran/WG1_RL 1/TSGR1_88/Docs/ [retrieved on 2017-02-06]
- ZTE ET AL: "NR DL Control Channel Structure", 3GPP DRAFT; R1-1700257, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 20 January 2017 (2017-01-20), pages 1-6, XP051202760, Retrieved from the Internet: URL:http://www.3gpp.org/ftp/tsg_ran/WG1_RL 1/TSGR1_AH/NR_AH_1701/Docs/ [retrieved on 2017-01-10]
- LG ELECTRONICS: "Discussion on search space design", 3GPP DRAFT; R1-1702477, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 7 February 2017 (2017-02-07), XP051221335, Retrieved from the Internet: URL:http://www.3gpp.org/ftp/tsg_ran/WG1_RL 1/TSGR1_88/Docs/ [retrieved on 2017-02-07]
- ZTE: "NR DL Control Channel Structure", 3GPP TSG RAN WG1 NR Ad-Hoc Meeting, R1-1700257, 10 January 2017 (2017-01-10), XP051202760, Spokane, USA
- LG ELECTRONICS: "Discussion on search space design", 3GPP TSG RAN WG1 Meeting #88, R1-1702477, 7 February 2017 (2017-02-07), XP051221335, Athens, Greece
- HUAWEI: "Search space design aspects", 3GPP TSG RAN WG1 Meeting #88, R1-1701640, 6 February 2017 (2017-02-06), XP051220523, Athens, Greece
- CATT: "DL control search space design", 3GPP TSG RAN WG1 Meeting #88, R1-1702093, 7 February 2017 (2017-02-07), XP051221007, Athens, Greece

## Description

### [Technical Field]

The present disclosure relates to a wireless communication system, and more particularly, to a method for transmitting and receiving downlink control information based on a blind detection technique, and a device therefor.

### [Background Art]

As more communication devices require greater communication capacity, the need of mobile broadband communication more enhanced than the conventional RAT (radio access technology) has been issued in a next generation communication system discussed recently. Also, massive MTC (Machine Type Communications) technology that provides various services anywhere and at any time by connecting a plurality of devices and things is one of main issues which will be considered in next generation communication. Furthermore, considering service/user equipment (UE) susceptible to latency and reliability, Ultra-Reliable and Low Latency Communication (URLLC) has been discussed in a next generation communication system.

As described above, a new RAT considering eMBB, mMTC and URLCC has been discussed for next generation wireless communication.

The document ("Search space design aspects", 3GPP DRAFT, R1-1701640, XP051220523) outlines considerations on control search space and control resource set. In the document split of decoding candidates between aggregation levels and/or control resource sets and multiple search spaces with different transmission parameters for one control message are proposed.

The document ("NR DL Control Channel Structure", 3GPP DRAFT, RI-1700257, XP051202760) outlines analysis on a PDCCH structure design for NR, a DCI design and a procedure thereof. In the document it is proposed that common DCI candidates are transmitted in common search space, and channel estimation among candidates of different aggregation level is allowed.

The document ("Discussion on search space design", 3GPP DARFT, R1-1702477, XP051221335) outlines resource set-specific characteristics and search space specific characteristics for flexible operations of NR-PDCCH.

### [Disclosure]

### [Technical Problem]

An object of the present disclosure devised to solve the problem lies on a method for more efficiently and accurately transmitting or receiving downlink control information in a wireless communication system supporting multiple beams, and an apparatus therefor.

The objects that could be achieved with the present disclosure are not limited to what has been particularly described hereinabove, and other objects that the present disclosure could achieve will be more clearly understood from the following detailed description.

### [Technical Solution]

Preferred embodiments of the present disclosure are provided as defined in the appended claims by which the protection scope is to be set.

### [Advantageous Effects]

According to an embodiment of the present disclosure, multiple beams capable of transmitting and receiving downlink control information are configured in a terminal, and therefore robust and reliable transmission and reception of downlink control information may be implemented in a wireless channel environment. In addition, a total blind decoding (BD) number by which the terminal can perform blind decoding may be distributed to multiple beams, and the terminal may perform BD by the BD number assigned to each beam. Thereby, BD complexity of the UE according to the multi-beam configuration may be addressed.

The effects that can be achieved with the present disclosure are not limited to what has been particularly described hereinabove and other advantages of the present disclosure will be more clearly understood from the following detailed description.

### [Description of Drawings]

FIG. 1 is a diagram illustrating physical channels used for 3GPP LTE/LTE-A system and a general signal transmission method using the same.
FIG. 2 is a diagram illustrating a structure of a radio frame for 3GPP LTE/LTE-A system.
FIG. 3 is a diagram illustrating a resource grid for a downlink slot for 3GPP LTE/LTE-A system.
FIG. 4 is a diagram illustrating a structure of a downlink subframe for 3GPP LTE/LTE-A system.
FIG. 5 is a diagram illustrating a structure of an uplink subframe for 3GPP LTE/LTE-A system.
FIG. 6 is a flowchart illustrating a method of transmitting and receiving downlink control information according to an embodiment of the present disclosure.
FIG. 7 illustrates a terminal and a base station according to an embodiment of the present disclosure.

### [MODE FOR CARRYING OUT THE INVENTION]

The following description of embodiments of the present disclosure may apply to various wireless access systems including CDMA (code division multiple access), FDMA (frequency division multiple access), TDMA (time division multiple access), OFDMA (orthogonal frequency division multiple access), SC-FDMA (single carrier frequency division multiple access) and the like. CDMA can be implemented with such a radio technology as UTRA (universal terrestrial radio access), CDMA 2000 and the like. TDMA can be implemented with such a radio technology as GSM/GPRS/EDGE (Global System for Mobile communications)/General Packet Radio Service/Enhanced Data Rates for GSM Evolution). OFDMA can be implemented with such a radio technology as IEEE 802.11 (Wi-Fi), IEEE 802.16 (WiMAX), IEEE 802.20, E-UTRA (Evolved UTRA), etc. UTRA is a part of UMTS (Universal Mobile Telecommunications System). 3GPP (3rd Generation Partnership Project) LTE (long term evolution) is a part of E-UMTS (Evolved UMTS) that uses E-UTRA. 3GPP LTE adopts OFDMA in downlink and adopts SC-FDMA in uplink. LTE-A (LTE-Advanced) is an evolved version of 3GPP LTE.

For clarity, the following description mainly concerns 3GPP based mobile communication system, but the technical idea of the present disclosure is not limited thereto. Specific terms used in the following description are provided to provide further understanding of the present disclosure and use of the terms may be modified to other forms within the scope of the present disclosure.

Prior to discussion of the New RAT, the 3GPP LTE/LTE-A system will briefly be described. The following description of 3GPP LTE/LTE-A may be referenced to help understanding of New RAT, and some LTE/LTE-A operations and configurations that do not conflict with the design of New RAT may also be applied to New RAT. New RAT may be referred to as 5G mobile communication for convenience.

### • 3GPP LTE/LTE-A System

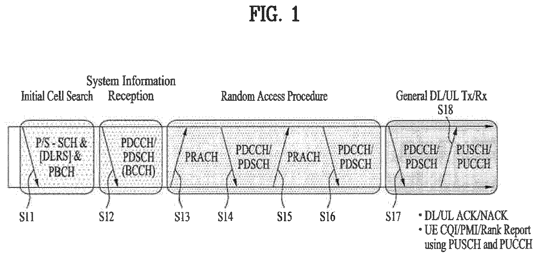

FIG. 1 is a diagram illustrating physical channels used for 3GPP LTE/LTE-A system and a general signal transmission method using the same.

Referring to FIG. 1, if power of a user equipment (UE) is turned on or the UE enters a new cell, the UE may perform an initial cell search operation for matching synchronization with a base station (BS) and the like in operation S101. To this end, the UE may receive a primary synchronization channel (P-SCH) and a secondary synchronization channel (S-SCH) from the BS, may match synchronization with the BS and may then obtain information such as a cell ID and the like. Subsequently, the UE may receive a physical broadcast channel (PBCH) from the BS and may be then able to obtain intra-cell broadcast information. Meanwhile, the UE may receive a downlink reference signal (DL RS) and may be then able to check a DL channel state.

Upon completing the initial cell search, the UE may receive a physical downlink control channel (PDCCH) and a physical downlink shared control channel (PDSCH) according to the physical downlink control channel (PDCCH) in operation S102, thereby obtaining a detailed system information.

Thereafter, the UE may perform a random access procedure to complete access to the BS as in operations S103 to S106. To this end, the UE may transmit a preamble via a physical random access channel (PRACH) (S103) and may then receive a response message on PDCCH and a corresponding PDSCH in response to the preamble (S104). In case of contention-based random access, it may perform a contention resolution procedure such as a transmission (S105) of an additional physical random access channel and a channel reception (S106) of a physical downlink control channel and a corresponding physical downlink shared channel.

Upon performing the above-mentioned procedures, the UE may perform a PDCCH/PDSCH reception (S107) and a PUSCH/PUCCH (physical uplink shared channel/physical uplink control channel) transmission (S108) as a general uplink/downlink signal transmission procedure. Control information transmitted to a BS by a UE may be commonly named uplink control information (hereinafter abbreviated UCI). The UCI may include Hybrid Automatic Repeat and reQuest Acknowledgement/Negative-ACK (HARQ-ACK/NACK), Scheduling Request (SR), Channel Quality Indication (CQI), Precoding Matrix Indication (PMI), Rank Indication (RI) and the like. In the present specification, the HARQ-ACK/NACK is simply called HARQ-ACK or ACK (NACK) (A/N). The HARQ-ACK includes at least one of a positive ACK (simply, ACK), a negative ACK (NACK), DTX, and NACK/DTX. The UCI is normally transmitted on PUCCH. Yet, when both control information and traffic data need to be simultaneously transmitted, the UCI may be transmitted on PUSCH. Moreover, the UCI may be non-periodically transmitted in response to a request/indication made by a network.

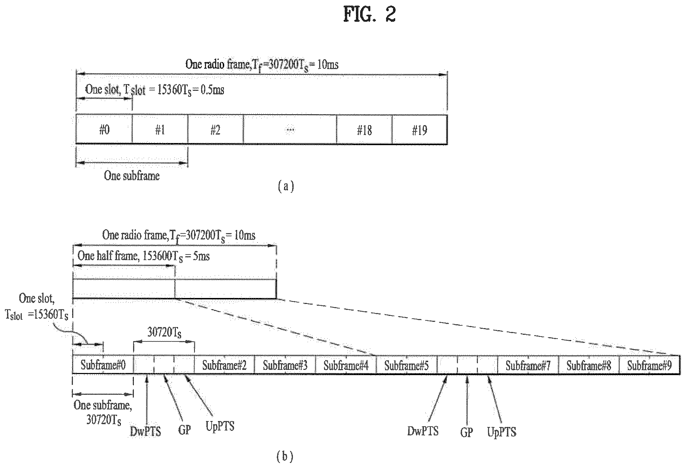

FIG. 2 is a diagram illustrating a structure of a radio frame. Referring to FIG. 2, UL/DL (uplink/downlink) data packet transmission is performed in a unit of subframe in a cellular OFDM radio packet communication system. And, one subframe is defined as a predetermined time interval including a plurality of OFDM symbols. In the 3GPP LTE standard, a type-1 radio frame structure applicable to FDD (frequency division duplex) and a type-2 radio frame structure applicable to TDD (time division duplex) are supported.

FIG. 2(a) is a diagram for a structure of a type 1 radio frame. A DL (downlink) radio frame includes 10 subframes. Each of the subframes includes 2 slots in time domain. And, a time taken to transmit one subframe is defined as a transmission time interval (hereinafter abbreviated TTI). For instance, one subframe may have a length of 1 ms and one slot may have a length of 0.5 ms. One slot may include a plurality of OFDM symbols in time domain and may include a plurality of resource blocks (RBs) in frequency domain. Since 3GPP LTE system uses OFDM in downlink, OFDM symbol is provided to indicate one symbol period. The OFDM symbol may be named SC-FDMA symbol or symbol period. Resource block (RB) may include a plurality of contiguous subcarriers in one slot.

The number of OFDM symbols included in one slot may vary according to a configuration of Cyclic Prefix (CP). The CP may be categorized into an extended CP and a normal CP. For instance, in case that OFDM symbols are configured by the normal CP, the number of OFDM symbols included in one slot may be 7. In case that OFDM symbols are configured by the extended CP, since a length of one OFDM symbol increases, the number of OFDM symbols included in one slot may be smaller than that of the case of the normal CP. In case of the extended CP, for instance, the number of OFDM symbols included in one slot may be 6. If a channel status is unstable (e.g., a UE is moving at high speed), it may use the extended CP to further reduce the inter-symbol interference.

When a normal CP is used, since one slot includes 7 OFDM symbols, one subframe includes 14 OFDM symbols. In this case, first maximum 3 OFDM symbols of each subframe may be allocated to PDCCH (physical downlink control channel), while the rest of the OFDM symbols are allocated to PDSCH (physical downlink shared channel).

FIG. 2(b) is a diagram for an example of a structure of a type 2 radio frame. The type-2 radio frame includes 2 half frames. Each of the half frames includes 5 subframes, DwPTS (downlink pilot time slot), GP (guard period) and UpPTS (uplink pilot time slot) and one subframe consists of two slots. The DwPTS is used for initial cell search, synchronization or channel estimation in a UE. The UpPTS is used for channel estimation in a BS and uplink transmission synchronization of a UE. The guard period is a period for eliminating interference generated in uplink due to multi-path delay of a downlink signal between uplink and downlink.

The above-described structures of the radio frame are exemplary only. And, the number of subframes included in a radio frame, the number of slots included in the subframe and the number of symbols included in the slot may be modified in various ways.

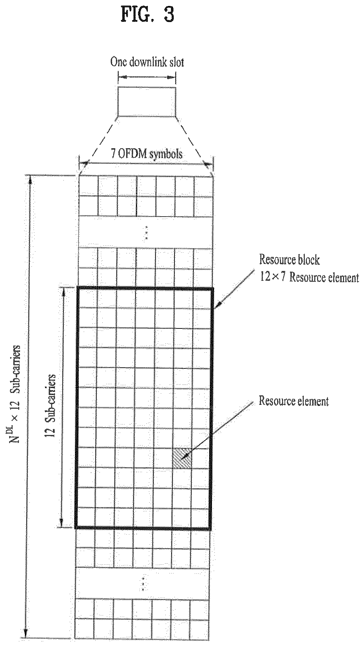

FIG. 3 is a diagram illustrating a resource grid for a downlink slot.

Referring to FIG. 3, one downlink (DL) slot may include a plurality of OFDM symbols in time domain. In particular, one DL slot exemplarily includes 7(6) OFDM symbols and one resource block (RB) includes 12 subcarriers in frequency domain. Each element on a resource grid is called a resource element (hereinafter abbreviated RE). One resource block includes 12×7(6) resource elements. The number NRB of resource blocks included in a DL slot may depend on a DL transmission bandwidth. And, the structure of an uplink (UL) slot may be identical to that of the DL slot and OFDM symbol is replaced by SC-FDMA symbol.

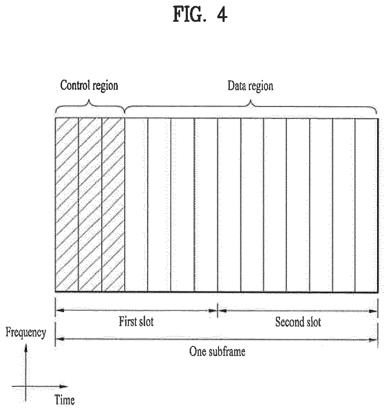

FIG. 4 is a diagram illustrating a structure of a downlink subframe.

Referring to FIG. 4, maximum 3 (4) OFDM symbols situated at a fore part of a first slot of one subframe correspond to a control region to which control channels are allocated. The rest of OFDM symbols correspond to a data region to which PDSCH (physical downlink shared channel) is allocated. PDSCH is used for carrying a transport block (hereinafter abbreviated TB) or a codeword (hereinafter abbreviated CW) corresponding to the TB. The TB means a data block delivered from a MAC (medium access control) layer to a PHY (physical) layer on a transport channel. The CW corresponds to a coded version of the TB. Correlation between the TB and the CW may vary depending on a swapping. In the present specification, PDSCH, a TB, and a CW are used in a manner of being mixed. Examples of DL control channels used by LTE (-A) may include PCFICH (Physical Control Format Indicator Channel), PDCCH (Physical Downlink Control Channel), PHICH (Physical hybrid automatic repeat request indicator Channel) and the like. The PCFICH is transmitted in a first OFDM symbol of a subframe and carries information on the number of OFDM symbols used for a transmission of a control channel within the subframe. The PHICH carries a HARQ-ACK (hybrid automatic repeat and request acknowledgement) signal in response to an UL transmission. The HARQ-ACK response includes a positive ACK (simply, ACK), a negative ACK (NACK), DTX (discontinuous transmission), or NACK/DTX. In this case, HARQ-ACK, HARQ ACK/NACK, and ACK/NACK are used in a manner of being mixed.

Control information carried on PDCCH may be called downlink control information (hereinafter abbreviated DCI). The DCI includes resource allocation information for a UE or a UE group and different control information. For instance, the DCI includes UL/DL scheduling information, UL transmit (Tx) power control command, and the like.

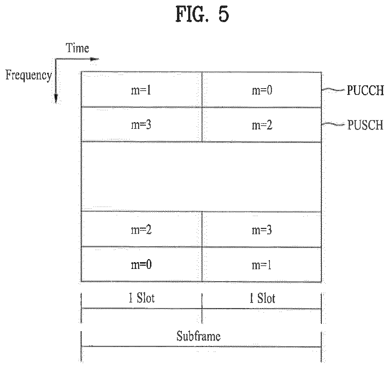

FIG. 5 is a diagram illustrating a structure of an uplink subframe.

Referring to FIG. 5, an uplink subframe includes a plurality of slots (e.g., 2 slots). A slot may include a different number of SC-FDMA symbols according to a length of CP. A UL subframe may be divided into a control region and a data region in frequency domain. The data region includes PUSCH and can be used for transmitting a data signal such as an audio and the like. The control region includes PUCCH and can be used for transmitting UL control information (UCI). The PUCCH includes an RB pair situated at the both ends of the data region on a frequency axis and hops on a slot boundary.

The PUCCH can be used for transmitting control information such as SR (Scheduling Request), HARQ-ACK and/or CSI (Channel State Information).

### • New RAT

Analog beamforming is usable in new RAT (NR) is described below.

### Analog Beamforming

Since a wavelength becomes short in the field of Millimeter Wave (mmW), a plurality of antenna elements may be installed in the same area. That is, a wavelength is 1cm in a band of 30GHz, and a total of 100 antenna elements of a 2D array may be arranged in a panel of 5 by 5 cm at an interval of 0.5 λ (wavelength). Therefore, as a plurality of antenna elements are used, beamforming gain is enhanced, and coverage increase and/or throughput improvement is expected.

In the mmW scheme, if a transceiver unit (TXRU) is provided per antenna element, it is possible to control a transmission power and phase per antenna element, whereby independent beamforming may be performed for each frequency resource. However, a problem occurs in that effectiveness is deteriorated in view of cost when TXRU is independently provided for all of 100 antenna elements.

Therefore, a scheme for mapping a plurality of antenna elements into one TXRU and controlling a beam direction by an analog phase shifter may be considered. However, since this analog beamforming scheme forms beams in only one beam direction with respect to a full band, a problem occurs in that frequency selective beamforming is not available.

As a hybrid type of digital beamforming and analog beamforming, a hybrid beamforming scheme for mapping a total of B TXRUs into a total of Q antenna elements (where, B<Q) may be considered. In this case, although there is a difference depending on a mutual connection scheme of B TXRUs and Q antenna elements, the number of beam directions that enable simultaneous transmission is limited to B or less.

### NR Control Channel

In the NR system, a unit forming the basis of transmission of a control channel may be defined as a NR-resource element group (REG) and/or a NR-control channel element (CCE).

The NR-REG may correspond to one OFDM symbol in the time domain and one physical resource block (PRB) in the frequency domain. One PRB may correspond to 12 subcarriers, and one CCE may correspond to 6 REGs.

Hereinafter, a control resource set (CORESET) and a search space (SS) will be described in brief. The CORESET may be a set of resources for control signal transmission, and the SS may be a set of candidate control channels which a UE performs blind detection for. The SS may be configured in the CORESET. For example, assuming that one SS is defined in one CORESET, CORESETs may be defined for a common search space (CSS) and a UE-specific search space (USS), respectively. As another example, multiple SSs may be defined in one CORESET. For example, the CSS and USS may be configured in the same CORESET. In the following description, a CSS may mean a CORESET in which the CSS is configured, and a USS may mean a CORESET in which the USS is configured.

A BS may transmit information on a CORESET to a UE. For example, the CORESET configuration of each CORESET and the time duration (e.g., 1, 2, or 3 symbol) thereof may be signaled. When interleaving is applied to a 1-symbol CORESET for CCE distribution, 2 or 6 REGs may be bundled. In the case of a 2-symbol CORESET, 2 or 6 REGs are bundled and time-first mapping may be applied. In the case of a 3-symbol CORESET, 3 or 6 REGs are bundled and time-first mapping may be applied. When REG bundling is performed, a UE may assumed that the same precoding is applied to a corresponding bundling unit.

### Multi-Beam Management for Control Channel

Hereinafter, a description will be given of a method of configuring a beam pair and monitoring beams for connection when a transmitting end (e.g., an eNodeB) and a receiving end (e.g., a UE) each have one or more beams. A method of allocating a control channel search space and a method of differently performing blind decoding (BD) according to configuration of beams will also be described.

### 1. Beam Configuration & Radio Link Monitoring (RLM) Operation for UE

A UE may receive, through multiple beams, a control channel (e.g., NR-PDCCH) carrying DCI. Among various beams, the primary beam and the secondary beam may be defined from the UE prospective. Therefore, an environment where the primary beam and the secondary beam are defined and an environment where such beams are undefined may be considered.

The primary/secondary beams to be described later correspond to a different concept from the primary/secondary cells of the legacy LTE system. The primary/secondary beams do not necessarily belong to different cells. The primary/secondary beams may be configured in the same cell. For example, both the primary/secondary beams may be configured in one carrier band. Alternatively, the primary/secondary beams may be configured in different carrier bands.

### 1.1 When Primary Beam and Secondary Beam are Defined

When the primary beam and the secondary beam are defined, the function and operation of the primary beam may be different from those of the secondary beam.

An RRC reconfiguration message for the secondary beam(s) may be transmitted by the primary beam. For example, a higher layer signaling message for configuring/reconfiguring the secondary beam may be transmitted by the primary beam.

In this case, the UE may perform radio link monitoring (RLM) only on the primary beam and may declare radio link failure (RLF) for the primary beam.

For example, RLM may be performed only on the primary beam. In this case:
(i) RLM measurement of the UE may be limited to a subset of a resource set in which the primary beam is transmitted. The UE performs SINR calculation and measurement only on the primary beam. The RLM operation of the UE may be the same regardless of whether the RS required for RLM is a PBCH or a DM-RS. That is, RLM may be performed only on one beam.
(ii) As another example, an average of multiple beams, best beam selection, or weighted average beam selection may be used for RLM measurement. However, RLF declaration may be performed only when the primary beam needs to be switched but the primary beam switching procedure is not available. That is, RLM is performed on multiple beams, but RLF may occur when primary beam switching is not allowed (e.g., when the secondary beam cannot become a primary beam).
(iii) Alternatively, the beam recovery procedure may be performed only when the primary beam connection fails. For example, when the secondary beam connection fails, the UE may use another secondary beam through secondary beam switching.

As a backup scheme for the primary beam connection failure, when the primary beam is interrupted, an RRC reconfiguration message for the primary beam may be transmitted by the secondary beam.

Alternatively, the configuration of the primary beam may be signaled together with the configuration of a control search space or a control resource set (CORESET). The configuration of the secondary beam(s) may also be included in the configuration of the control search space or the CORESET. However, the secondary beam(s) configured for the UE may be activated through a separate activation message. The activation message for the secondary beam(s) may be in the form of DCI or MAC control element (CE).

In addition, reconfiguration of the secondary beam may be performed without interruption of the primary beam. In addition, as described below, the secondary beam may be switched to a primary beam.

### 1.1.1 Switching Secondary Beam to Primary Beam

Measurement of the primary beam and the secondary beam by the UE may be persistently performed. Alternatively, the UE may measure and report each beam at the request of the aperiodic network. The network may determine a condition for primary beam switching based on the measurement report of the UE and instruct the UE. Alternatively, the UE may make a request to the network for primary beam switching based on the measurement of the primary beam and the secondary beam.

### 1.1.1.1 Network makes a request to UE for primary beam switching

The network may make a request to the UE for primary beam switching.

For example, the network may request primary beam switching only through the primary beam and may not perform primary beam switching until an ACK is received from the UE. For example, the network may receive an ACK from the UE in response to the transmitted beam switching request and may perform beam switching when a confirmation of beam switching is received. The confirmation of beam switching may be transmitted by the existing primary beam and/or a new primary beam or a secondary beam. Alternatively, beam switching may be performed when the UE transmits the ACK without confirmation of beam switching.

As another example, the network may transmit the primary beam switching request only by the secondary beam. In this case, the network/UE may perform primary beam switching through a regular RRC procedure.

In addition, the primary beam switching request may be limited so as to be transmitted only in the beam sweeping period. For example, since the network may not know the beam direction of the UE, primary beam switching may be defined to be performed only on a resource on which beam sweeping is performed.

As another example, a beam switching request may be transmitted by the primary/secondary beam. The UE may monitor the old/new primary beams simultaneously during the RRC ambiguity period, in which beam switching is not completed, and the network may temporarily configure a separate resource set for the UE to allow monitoring of a new primary beam.

For example, a resource set and blind detection (BD) distribution for monitoring a new primary beam may be configured as follows. Here, the BD distribution may mean that the network sets the number of BDs that the UE should perform on the old primary beam and the number of BDs that the UE should perform on the new primary beam.
(i) As an example, the same resource set may be configured for the old/new primary beams, but the UE may monitor each beam on a different OFDM symbol. For example, the UE may be defined to monitor the old primary beam on a first OFDM symbol and to monitor the new primary beam on a second OFDM symbol.
(ii) As another example, the UE may pre-receive configuration of a resource set for the new primary beam through RRC. When the UE receives a primary beam switching request through the RRC, the corresponding resource set may be activated. When the RRC Configuration complete is triggered (e.g., beam switching is complete), the corresponding resource set may be deactivated. The UE may monitor the new primary beam in a resource set only when the resource set is activated.
(iii) As another example, the resource set for the existing secondary beam may be used as a resource set for the new primary beam. This scheme may be useful when the new primary beam is selected from among the secondary beams. In a case where a new primary beam is selected among the new beams, temporary resource set information for the new primary beam may be included in an RRC message for beam switching.

In methods (i) to (iii), after RRC completion, the resource set/BD configuration for the new primary beam may conform to the resource set/BD configuration for the old primary beam. In addition, the old primary beam may be switched to the secondary beam. Otherwise, the UE may not monitor the old primary beam anymore.

For example, a resource set may be defined through an RRC configuration or a MAC CE, and a temporary resource set for a new primary beam may be separately configured in an ambiguity period (e.g., a period before beam switching is complete after the beam switching request) or may be configured at the time of RRC reconfiguration. During the ambiguity period, the UE may monitor both the old and/or new primary beams, and the network may transmit the same message by both beams or by only one of the two beams.

### 1.2 When There Is No Definition of Primary Beam and Secondary Beam

If there is no definition of the primary beam/secondary beam, this may mean that all beams have the same priority/function or that the UE is configured to monitor only one beam. In this case, a beam on which the UE is to perform RLM may be selected in various ways. For example, a specific beam may be designated for the RLM, the best beam may be selected from among multiple beams, or a beam having an average performance level may be selected from among multiple beams.

Various methods including an RRC message may be used for beam configuration.

According to this example, the same beam recovery/management may be applied to all beams. RLF may occur when all beams fail in connection. Alternatively, if the RLM result is Out-of-Sync. and the beam recovery fails, RLF may occur.

### 1.3 When Operation of Multi-Beam/Single-Beam is UE-Transparent

The UE may not recognize whether the received beam is multiple beams or a single beam. For example, when the DM-RS sequence does not differ among the beams, or the DM-RS and data are transmitted in the same beam direction, the operation may be UE-transparent. In addition, the operation may be UE-transparent may be performed when the same UE Rx beam is given for multiple beams. Since the UE does not recognize the form of the beams, it may perform RLM similarly to RLM of a single beam.

When multiple beams are configured in a UE, the network may select one of the multiple beams and transmit the DCI. If the network repeatedly transmits the same DCI through the multiple beams, the UE may process overlapping DCI. The network may indicate whether to send one DCI on only one beam or multiple beams, through higher layer signaling. This scheme is applicable not only to DCI transmission but also to UCI transmission. When the same DCI is repeatedly transmitted by multiple beams or the network/UE operates in a mode for this operation, the network may signal the number of times the same DCI is repeatedly transmitted to the UE. To identify the same DCI, the UE may assume that resource allocation is the same if the HARQ process ID and new data indicator (NDI) are the same in UE-specific data transmission. In the case of groupcommon data transmission or cell-specific data transmission, the following operations (i) and (ii) may be performed.

(i) As an example, the UE may assume that control information (e.g., DCI) can be received through multiple beams, but in the CSS, it may assume that only one DCI is received through one beam. When the same data can be scheduled by DCIs received through multiple beams, the UE may receive information about beams for which aggregation (e.g., data aggregation) is allowed from the network. In this way, CSS control information/data and USS control information/data may be treated differently.

(ii) As another example, when multiple beams are configured in a UE, the UE may assume that the same configuration is applicable to both the USS/CSS. In this case, the UE may receive data according to the scheduling of the DCI exhibiting the highest quality among the detected DCIs or read all data scheduled by each DCI.

The DCI transmitted through the USS may include a beam index for data transmission. The beams of control information and data may be different from each other. If the network redundantly transmits DCI through multiple beams, a gap for beam switching may be given between the control information and the data (i.e., control decoding latency) for the UE. The network may transmit data through each beam. In this case, when the control information is redundant, the data may also be redundant. Since one data redundancy may cause unnecessary waste of resources, the network may configure different beams for data through cross-slot scheduling and transmit the data on only one beam.

The configuration applied to DCI transmission may also be applied to UCI transmission. When repetitive transmission is arranged by the configuration, the UE may repeatedly transmit UCI through multiple beams. On the contrary, in the case of a configuration instructing transmission through only one beam, the UE may transmit UCI only on a resource corresponding to the beam selected by the network/UE.

Alternatively, a configuration for UCI may be defined separately from the configuration for DCI.

### 2. Search Space Allocation

Hereinafter, a description will be given of allocation of search spaces performed when the primary/second beams are defined or the multi-beam is defined.

When a separate resource set is allocated to each beam, the CSS and USS may be arranged together for each of multiple beams, or may be separately arranged according to the states and purposes of the beams.

In addition, the CSS/USS may be arranged separately from each other. This arrangement of the search spaces may be changed depending on various environments such as performance of a beam or a configured resource set.

When a different resource set is configured for each beam, presence or absence of CSS/USS application may be configured for each resource set, or resource sets of the CSS/USS may be configured differently.

When multiple beams are configured in the CSS, the UE may assume that CSS data received through the corresponding beams can be aggregated. In this case, the UE may determine whether to read only one datum among the data received through the multiple beams, to read the multiple data and take only the data having the best performance, or to aggregate the received multiple data. The UE may assume that the data transmitted on the corresponding beams are the same. The assumption of the same data may be applied to data scheduled by the DCI transmitted in the CSS in at least the same slot. Alternatively, the network may inform the UE of period or time information in which the same data may be assumed. Otherwise, the UE may assume different data transmissions.

Alternatively, when the primary beam and the secondary beam are configured, the UE may monitor the CSS only in the primary beam. Alternatively, the UE may monitor the CSS even in the secondary beam, but the RNTI used for monitoring of the CSS on the secondary beam and the RNTI used for monitoring of the CSS on the primary beam may be configured differently. For example, all RNTIs may be used in the CSS of the primary beam, but only a UE-specific RNTI/group-specific RNTI such as C-RNTI may be used in the CSS of the secondary beam.

### 3. RACH Procedure with Multi-Beam

A random access procedure in the multi-beam environment will be described. Multiple beams may be formed by one or more transmission/reception points (TRPs).

### 3.1 Paging

### 3.1.1 Paging in IDLE Mode

Since it is difficult to recognize the best beam information about the UE in the idle mode, the network may transmit paging information by various beams using a beam sweeping method. In this case, the network may define a configuration for the time for sweeping each beam and the transmission time of the paging information, and may align the sweeping timing with the paging information transmission time.

### 3.1.2 Paging in CONNECTED Mode

Even in the connected mode, paging information may be transmitted for updating of system information or the like, and detailed methods therefor will be discussed.

### 3.1.2.1 Maintaining the same CSS for paging in the idle mode

Slot and frequency indexes defined for paging in the idle mode may be used even in the CONNECTED mode.

Since the UE should be allowed to receive both the resources defined for the connected mode and the resources defined for the idle mode, frequency retuning may be needed for the UE to read the paging information.

### 3.1.2.2 Configuring CSS for paging separately in the connected mode

CSSs for paging may be configured separately for the idle mode and the Connected mode. Information about the CSS for paging in the connected mode may be transmitted on the PDCCH or PDSCH.

### 3.1.2.3 Transmission for paging is always performed in USS

DCI for SI update may be transmitted in the CSS through a RNTI separate from that for paging or through a separate DCI format, and paging may be transmitted in the USS in a unicast manner.

### 3.2 RAR for Multi-Beam

### 3.2.1 RAR in IDLE Mode/RAR for Contention-based PRACH

### 3.2.1.1 RAR transmission only in the best beam

The random access response (RAR) may be transmitted only through the best beam. As the RAR is transmitted through the best beam, the best beam index may be automatically known to the UE. The best beam may be determined by the network. For example, the best beam may be defined as a correspondence beam of a physical random access channel (PRACH) beam by which a random access preamble is transmitted.

### 3.2.1.2 RAR transmission by K beams

The RAR may be transmitted by K beams. The number of beams, K, may be set through a system information block (SIB), and the K beams may be beams neighboring the best beam or may be configured by the SIB. For example, when each beam becomes the best beam, K beams to be used together with the best beam may be configured in the UE.

When K beams are selected, the RAR may be transmitted by only one of the K beams or by all the K beams. Whether the RAR is transmitted by only one beam or by all the K beams may be configured through higher layer signaling.

In addition, when several beams are configured, a control resource set may be configured separately for each beam or automatically configured within the RAR window. As an example, when the control resource set is automatically configured, the UE may monitor the K beams in turn from the first beam in the configured control resource set.

### 3.2.2 RAR in CONNECTED or RAR for Contention-Free PRACH

The RAR may be transmitted using a CSS or USS defined for the RAR. In addition, the RAR may be transmitted only by the best beam or may be transmitted by K beams.

The RAR to the contention-free PRACH transmission may be transmitted according to the CSS of the UE or the configuration of the USS. Which search space is to be used to transmit the RAR may be indicated through higher layer signaling.

The C-RNTI may be used to transmit the RAR in the USS (e.g., the PDCCH for the RAR transmission is scrambled with the C-RNTI), and the RAR content may be transmitted on the payload (e.g., PDSCH). In this case, it is difficult to check the RAR transmission in the physical layer of the UE because whether the UE receives the RAR transmission is be determined only when the PDSCH is decoded. Therefore, the network may use an RNTI other than the C-RNTI for RAR transmission such that the RAR may be identified in the physical layer. Alternatively, in the case of contention-free random access, the random access procedure may not be defined as being completed through RAR reception.

When the RAR is transmitted in the CSS, the RAR beam correspondence (of the PRACH beam) may be different from the beam configured through the CSS. In this case, the network may configure only time/frequency resources for the contention-free PRACH, and the UE may select a beam. In this case, information about the PRACH beam selected by the UE may also be transmitted on the PRACH. Alternatively, the network may configure a PRACH resources for multiple beams, and the UE may select a PRACH. Alternatively, the beams may be switched only through the beam recovery/maintenance procedure, and the contention-free PRACH may be fixed to one beam.

When the correspondence beam for the PRACH beam is different from the beam for CSS monitoring, the following options (i) to (iv) may be considered.
(i) The UE may assume that the RAR is still received in the configured CSS.
(ii) The UE may assume the same time/frequency resource (to CSS configuration) and assume only the beam as a correspondence to the PRACH.
(iii) There may be a separate temporary or RAR CSS configuration for each beam. That is, there is a separate CSS configuration for each beam, and the UE may monitor the PRACH corresponding beam CSS.
(iv) When the UE transmits the PRACH in a different beam direction than the configured CSS, the UE may trigger a beam recovery procedure.

### 3.3 MSG 3

Beam ID may be transmitted through MSG 3. Beam ID may be transmitted by multiple beams.

### 3.4 MSG 4 PDCCH

The CSS for RAR may be used for PDCCH transmission through MSG 4. Alternatively, a search space for MSG 4 PDCCH may be configured for each beam.

### 3.5 SIB Transmission

A beam for the SIB CSS may be defined separately.

### 3.6 Multi-Beam Configuration via RRC

### 3.6.1 Primary Beam Selection via RACH Procedure + RRC Configuration on Second Beam(s) via Primary Beam SS

The primary beam may be configured through the RACH procedure and the secondary beams may be configured through the RRC configuration using the search space in the primary beam.

The UE may assume that the correspondence beam for the RACH successfully transmitted in the random access procedure is the best beam, and define the correspondence beam as the primary beam. Alternatively, when a beam is selected as the best beam through the beam recovery procedure after the RLF, the beam may be defined as the primary beam.

Alternatively, the network may indicate the best beam or primary beam to the UE through MSG 4 or the like in the RACH procedure, or may configure the same in the beam recovery procedure.

As a fallback operation, the primary beam may be defined to be updateable only through a beam recovery, beam switching, or beam pairing procedure. The secondary beams may be updated through the primary beam. That is, the primary beam may not be changed until the beam recovery, beam switching, or beam pairing procedure is triggered. Alternatively, the primary beam switching procedure for the control channel may be defined separately, and may be processed by beam switching.

### 3.6.2 Beam Configurations via Beam-sweeping PDCCH

The RRC message may be defined to be transmitted only in the PDCCH region, which is always beam-swept.

### 3.7 Multi-Beam Configuration via MAC CE

A primary beam or multiple beams may be defined through MAC CE.

### 3.8 Multi-Beam Configuration via DCI

The network may transmit the DCI by the primary beam, or may define a beam to transmit the DCI through the primary beam.

### 3.9 Unicast

There may be several options for the method for PDCCH transmission using multiple beams.

As an example, the network may always transmit the PDCCH by only one beam.

As another example, for at least the CSS, each beam may carry control information, and multiple beams may carry overlapping PDCCH/DCI.

As another example, for at least the CSS, the configured beams may always carry overlapping PDCCH/DCI.

### 4. BD Split

The total number of times that the UE performs blind decoding (BD) to detect the control information may be defined, and the total number of the UE BDs may be distributed to the multiple beams.

### 4.1 BD Split between Primary and Secondary Beams

### 4.1.1 Performing BD Only on Primary Beam

For example, the UE may basically perform the BD only on the primary beam, and the secondary beam may only serve to assist the primary beam connection. However, the network may be configured to perform the BD in the secondary beam in a special situation.

When the BDs that the UE can perform in the primary beam are set to be fewer than the total BDs to be performed, the network may selectively allow the UE to perform BD in the secondary beam.

In addition, when the condition of connection with the primary beam is not good, for example, when the SINR/CQI is low and it is difficult to maintain the connection with the primary beam, switching to the secondary beam may be triggered. For example, when the UE has a secondary beam, the network may transmit a signal to instruct the UE to perform secondary beam monitoring.

### 4.1.2 Performing BD in Primary Beam and Secondary Beam

### 4.1.2.1 Aggregation level (AL) set and BD number distribution by AL

It may be assumed that there are more resources for the primary beam than for the secondary beam, and reception performance of the primary beam is better than that of the secondary beam. In addition, an environment in which the UE receives the primary beam for a longer time than the secondary beam may be considered.

In this case, since the UE is very likely to decode control information in the primary beam first, the BD for a lower AL may be arranged in the primary beam. For example, the BD for a lower AL may be allocated to the primary beam and the BD for a higher AL may be allocated to the secondary beam.

In addition, the entire AL set may be allocated to one beam. However, when there is a plurality of BDs for each AL, the BDs for one AL are divided and arranged in the primary beam and the secondary beam. For example, when the number of BDs of the UE for the control channel candidate corresponding to AL-1 is N, k AL-1 BDs are allocated to the primary beam and N-k AL-1 BDs are allocated to the secondary beam.

### 4.1.2.2 Differential resource distribution by beam

The network may distribute different resource sets to the respective beams. For example, when there are M control symbols, the primary beam may be configured to be received on all M symbols or N (N <M) symbols, and the secondary beam may be configured to be received on P symbols (N+P=M, N≥P).

To this end, the network may allocate resources differently to the primary beam and the secondary beam from the beginning. Alternatively, the primary beam may always operate, but the network may indicate, to the UE, resources on which the UE needs to or does not need to monitor the secondary beam. The number of symbols that may be used for the primary beam and the secondary beam may be defined explicitly or implicitly. In this case, more symbols may be defined for the primary beam.

As a specific example, it is assumed that K1 BDs are allocated to the resource set of the primary beam, the UE monitors the primary beam in each slot, K2 BDs are allocated to the resource set of the secondary beam, and the UE monitors the secondary beam every N slots. In this case, the following options (i) to (v) may be considered.
(i) When the UE receives both the primary beam and the secondary beam in the N-th slot, the UE may perform K1+K2 BDs every N slots. K1+K2 should be less than or equal to the BD capacity of the UE.
(ii) The primary beam may be received in N-1 slots in every N slots, and the UE may stop receiving the primary beam upon receiving the secondary beam. The UE may perform BD on the primary beam K1-K2 times (or MAX-K2 times, where MAX is the maximum BD performance capacity) and perform BD on the secondary beam K2 times.
(iii) The resource set of the primary beam may be divided into two parts (or two or more parts). The UE may perform BD on the primary beam K3 times in every N-th slot and perform BD K1-K3 times in the remaining N-1 slots. The UE may perform BD on the secondary beam K2 times.
(iv) The UE may omit the primary beam monitoring in every N-th slot.
(v) When the BD capacity of the UE is defined for each symbol, more flexible BD distribution may be implemented. In this case, the number of BDs for each symbol or a plurality of symbols should not exceed the BD capacity of the UE. The primary beam/secondary beam may be received on a single symbol or multiple symbols. In this case, BD of each beam may be performed on a single symbol or multiple symbols.

### 4.2 Changing Monitoring Resource Set

Next, when the UE configures a resource set for monitoring the primary beam/secondary beam is changed, the blind decoding will be described.

### 4.2.1 Maintaining Same BD Ratio

Even if the resource sets of the primary beam and the secondary beam are changed, there may be a case where the resource ratio of the primary beam and the secondary beam is similar to the ratio given before the resource set is changed. The criterion for determining that the ratios of the resource sets of the beams are similar may be predefined.

In this case, the UE may perform BD at the same ratio as before the resource set for each beam is changed. When the resource set is downsized as a whole, the BD performance may be lowered for each beam, but the BD performance ratio may remain the same. In some cases, the BD may be omitted.

### 4.2.2 When the Resource Set of Primary Beam Is Greatly Expanded

When the resource set of the primary beam becomes large enough to cover all the search spaces according to change of the resource set, the UE may perform all the BDs in the primary beam. The criterion for determining that the primary beam resource set is extremely large may be defined by the UE or the network. For example, when the ratio of the space size of the remaining ALs to the space size of the highest AL is 3:4 before the resource set is changed, and the ratio is 3:7 after the resource set is changed, the UE may assume that the resource set corresponding to the remaining ALs is definitely large.

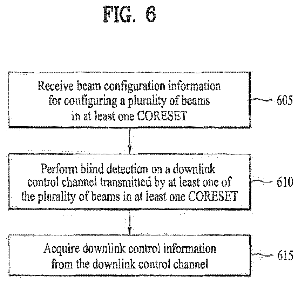

FIG. 6 is a flowchart illustrating a method of transmitting and receiving downlink control information according to an embodiment of the present disclosure. Redundant description of components described above may be omitted.

Referring to FIG. 6, the UE receives beam configuration information for configuring a plurality of beams in at least one control resource set (CORESET) from a BS (605).

The UE perform blind detection (BD) on a downlink control channel transmitted by at least one of the plurality of beams in at least one CORESET (610). In this case, the total number of BDs that may be performed by the UE may be divided and allocated to the plurality of beams. The UE may perform BD according to the number of BDs allocated to each beam.

The UE acquires downlink control information from the blind detected downlink control channel (615).

For example, multiple beams may be configured in different CORESETs. At least one of the common search space (CSS) and the UE-specific search space (USS) may be individually configured for each of the different CORESETs. The UE may monitor at least one of the CSS and the USS configured in the corresponding CORESETs using the beams configured in the corresponding CORESETs.

The multiple beams may include a primary beam and a secondary beam.

The UE may attempt to detect control channel candidates corresponding to a first aggregation level on the primary beam and to detect control channel candidates corresponding to a second aggregation level on the secondary beam.

The first aggregation level assigned to the primary beam may be configured to be lower than the second aggregation level assigned to the secondary beam.

The secondary beam may be activated/deactivated through the MAC message or downlink control information received through the primary beam.

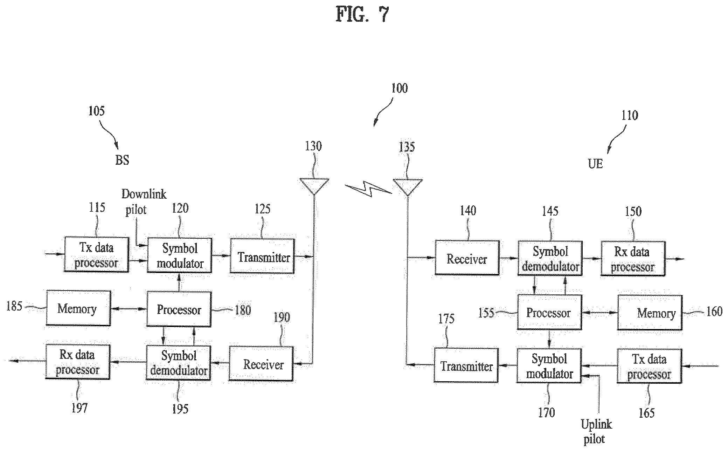

FIG. 7 is a block diagram showing the configuration of a BS 105 and A UE 110 in the wireless communication system 100 according to an embodiment of the present disclosure.

Although one BS 105 and one UE 110 are shown to simplify the wireless communication system 100, the wireless communication system 100 may include one or more BSs and/or one or more UEs.

The BS 105 may include a transmission (Tx) data processor 115, a symbol modulator 120, a transmitter 125, a transceiving antenna 130, a processor 180, a memory 185, a receiver 190, a symbol demodulator 195 and a received data processor 197. The UE 110 may include a transmission (Tx) data processor 165, a symbol modulator 170, a transmitter 175, a transceiving antenna 135, a processor 155, a memory 160, a receiver 140, a symbol demodulator 155 and a received data processor 150. Although the BS/UE 105/110 includes one antenna 130/135 in the figure, each of the BS 105 and the UE 110 includes a plurality of transceiving antennas. Therefore, each of the BS 105 and the UE 110 of the present disclosure supports a Multiple Input Multiple Output (MIMO) system. In addition, the BS 105 according to the present disclosure may support both Single User-MIMO (SU-MIMO) and Multi User-MIMO (MU-MIMO) systems.

On downlink, the transmission data processor 115 receives traffic data, codes the received traffic data by formatting the received traffic data, interleaves the coded traffic data, modulates (or symbol-maps) the interleaved data, and then provides the modulated symbols (data symbols). The symbol modulator 120 provides a stream of symbols by receiving and processing the data symbols and pilot symbols.

The symbol modulator 120 multiplexes the data and pilot symbols together and then transmits the multiplexed symbols to the transmitter 125. In doing so, each of the transmitted symbols may include the data symbol, the pilot symbol or a signal value of zero. In each symbol duration, pilot symbols may be contiguously transmitted. In doing so, the pilot symbols may include symbols of frequency division multiplexing (FDM), orthogonal frequency division multiplexing (OFDM), or code division multiplexing (CDM).

The transmitter 125 receives the stream of the symbols, converts the received stream to at least one or more analog signals, additionally adjusts the analog signals (e.g., amplification, filtering, frequency upconverting), and then generates a downlink signal suitable for a transmission on a radio channel. Subsequently, the downlink signal is transmitted to the UE via the antenna 130.

In the configuration of the UE 110, the receiving antenna 135 receives the downlink signal from the BS and then provides the received signal to the receiver 140. The receiver 140 adjusts the received signal (e.g., filtering, amplification and frequency downconversion), digitizes the adjusted signal, and then obtains samples. The symbol demodulator 145 demodulates the received pilot symbols and then provides them to the processor 155 for channel estimation.

The symbol demodulator 145 receives a frequency response estimated value for downlink from the processor 155, performs data demodulation on the received data symbols, obtains data symbol estimated values (i.e., estimated values of the transmitted data symbols), and then provides the data symbols estimated values to the received (Rx) data processor 150. The received data processor 150 reconstructs the transmitted traffic data by performing demodulation (i.e., symbol demapping, deinterleaving and decoding) on the data symbol estimated values.

The processing by the symbol demodulator 145 and the processing by the received data processor 150 are complementary to the processing by the symbol modulator 120 and the processing by the transmission data processor 115 in the BS 105, respectively.

In the UE 110 in uplink, the transmission data processor 165 processes the traffic data and then provides data symbols. The symbol modulator 170 receives the data symbols, multiplexes the received data symbols, performs modulation on the multiplexed symbols, and then provides a stream of the symbols to the transmitter 175. The transmitter 175 receives the stream of the symbols, processes the received stream, and generates an uplink signal. This uplink signal is then transmitted to the BS 105 through the antenna 135.

In the BS 105, the uplink signal is received from the UE 110 via the antenna 130. The receiver 190 processes the received uplink signal and then obtains samples. Subsequently, the symbol demodulator 195 processes the samples and then provides pilot symbols received in uplink and a data symbol estimated value. The received data processor 197 processes the data symbol estimated value and then reconstructs the traffic data transmitted from the UE 110.

The processors 155 and 180 of the UE 110 and the BS 105 instruct operations (e.g., control, adjustment, management, etc.) of the UE 110 and the BS 105. The processor 155, 180 may be connected to the memory 160, 185 configured to store program codes and data. The memory 160, 185 is connected to the processor 155, 180 to store an operating system, applications and general files.

The processor 155, 180 may be called one of a controller, a microcontroller, a microprocessor, a microcomputer and the like. In addition, the processor 155, 180 may be implemented using hardware, firmware, software and/or any combinations thereof. When embodiments of the present disclosure are implemented by hardware, the processor 155, 180 may be provided with a device configured to implement the present disclosure, such as application specific integrated circuits (ASICs), digital signal processors (DSPs), digital signal processing devices (DSPDs), programmable logic devices (PLDs), or field programmable gate arrays (FPGAs).

When embodiments of the present disclosure are implemented using firmware or software, the firmware or software may be configured to include modules, procedures, and/or functions for performing the above-explained functions or operations of the present disclosure. The firmware or software configured to implement the present disclosure may be provided in the processors 155 and 180 or stored in the memories 160 and 185 so as to be driven by the processors 155 and 180.

Layers of a radio protocol between a UE/BS and a wireless communication system (network) may be classified into a first layer L1, a second layer L2 and a third layer L3 based on 3 sub-layers of the open system interconnection (OSI) model, which is well known in the communication systems. A physical layer belongs to the first layer and provides an information transfer service on a physical channel. The radio resource control (RRC) layer belongs to the third layer and provides control radio resources between the UE and the network. The UE and the BS may exchange RRC messages with each other over a wireless communication network and the RRC layer.

The above-mentioned embodiments correspond to combinations of elements and features of the present disclosure in prescribed forms. And, it is able to consider that the respective elements or features are selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

### [Industrial Applicability]

As described above, the present disclosure is applicable to various wireless communication systems.

## Claims

1. A method for receiving downlink control information by a user equipment in a wireless communication system, the method comprising:
receiving (605) beam configuration information for configuring a plurality of beams in at least one control resource set, CORESET, from a base station;
blind detecting (610) a downlink control channel transmitted by at least one of the plurality of beams in the at least one CORESET; and
acquiring (615) downlink control information from the blind detected downlink control channel,
wherein a total number of blind detections executable by the user equipment is allocated to the plurality of beams, and the user equipment performs blind detection according to the number of blind detections allocated to each of the beams,
**characterised in that** the plurality of beams comprises a primary beam and a secondary beam,
wherein the user equipment attempts to detect control channel candidates corresponding to a first aggregation level among a plurality aggregation levels on the primary beam and the secondary beam,
wherein, based on a total number of blind detections for the control channel candidates corresponding to the first aggregation level is N, a number of blind detections that can be performed on control channel candidates corresponding to the first aggregation level for the primary beam is K, and a number of blind detections that can be performed on control channel candidates corresponding to the first aggregation level for the secondary beam is N-k, and
wherein the N and k are integers greater than or equal to 1.

2. The method of claim 1, wherein the plurality of beams is configured in different CORESETs.

3. The method of claim 2, wherein at least one of a common search space, CSS, and a user equipment-specific search space, USS, is individually configured for each of the different CORESETs,
wherein the user equipment monitors at least one of the CSS and the USS configured for a corresponding CORESET using a beam configured for the corresponding CORESET.

4. The method of claim 1, wherein the secondary beam is activated/deactivated through a MAC message or downlink control information received by the primary beam.

5. A user equipment (110) for receiving downlink control information in a wireless communication system, the user equipment (110) comprising:
a receiver (140); and
a processor (155) configured to:
receive, through the receiver (140), beam configuration information for configuring a plurality of beams in at least one control resource set, CORESET,;
blind detect a downlink control channel transmitted by at least one of the plurality of beams in the at least one CORESET; and
acquire downlink control information from the blind detected downlink control channel,
wherein a total number of blind detections executable by the processor is allocated to the plurality of beams, and the processor performs blind detection according to the number of blind detections allocated to each of the beams,
**characterised in that**
the plurality of beams comprises a primary beam and a secondary beam,
wherein the user equipment attempts to detect control channel candidates corresponding to a first aggregation level among a plurality aggregation levels on the primary beam and the secondary beam,
wherein, based on a total number of blind detections for the control channel candidates corresponding to the first aggregation level is N, a number of blind detections that can be performed on control channel candidates corresponding to the first aggregation level for the primary beam is K, and a number of blind detections that can be performed on control channel candidates corresponding to the first aggregation level for the secondary beam is N-k, and
wherein the N and k are integers greater than or equal to 1.

6. The user equipment (110) of claim 5, wherein the plurality of beams is configured in different CORESETs.

7. The user equipment (110) of claim 6, wherein at least one of a common search space, CSS, and a user equipment-specific search space, USS, is individually configured for each of the different CORESETs,
wherein the user equipment monitors at least one of the CSS and the USS configured for a corresponding CORESET using a beam configured for the corresponding CORESET.

8. The user equipment (110) of claim 5, wherein the secondary beam is activated/deactivated through a MAC message or downlink control information received by the primary beam.

## Patentansprüche

1. Verfahren zum Empfangen von Downlink-Steuerinformationen durch ein Benutzergerät in einem drahtlosen Kommunikationssystem, wobei das Verfahren umfasst:
Empfangen (605) von Strahlkonfigurationsinformationen zum Konfigurieren einer Vielzahl von Strahlen in mindestens einem Steuerressourcensatz, CORESET, von einer Basisstation;
Blinddetektion (610) eines Downlink-Steuerkanals, der von mindestens einem der Vielzahl von Strahlen in dem mindestens einen CORESET übertragen wird; und
Erfassen (615) von Downlink-Steuerinformationen aus dem blind erkannten Downlink-Steuerkanal,
wobei eine Gesamtzahl von Blinddetektionen, die durch das Benutzergerät ausführbar sind, der Vielzahl von Strahlen zugewiesen wird, und das Benutzergerät eine Blinddetektion entsprechend der Anzahl von Blinddetektionen durchführt, die jedem der Strahlen zugewiesen sind,
**dadurch gekennzeichnet, dass** die Vielzahl von Strahlen einen Primärstrahl und einen Sekundärstrahl umfasst,
wobei die Benutzerausrüstung versucht, Steuerkanalkandidaten zu erkennen, die einer ersten Aggregationsstufe aus einer Vielzahl von Aggregationsstufen auf dem Primärstrahl und dem Sekundärstrahl entsprechen,
wobei, basierend auf einer Gesamtzahl von Blinddetektionen für die Steuerkanalkandidaten, die der ersten Aggregationsstufe entsprechen N ist, eine Anzahl von Blinddetektionen, die an Steuerkanalkandidaten durchgeführt werden können, die der ersten Aggregationsstufe entsprechen, für den Primärstrahl K ist, und eine Anzahl von Blinddetektionen, die an Steuerkanalkandidaten durchgeführt werden können, die der ersten Aggregationsstufe entsprechen, für den Sekundärstrahl N-k ist, und
wobei N und k ganze Zahlen größer als oder gleich 1 sind.

2. Verfahren nach Anspruch 1, wobei die Vielzahl von Strahlen in verschiedenen CORESETs konfiguriert sind.

3. Verfahren nach Anspruch 2, wobei ein gemeinsamer Suchraum, CSS, und/oder ein benutzerspezifischer Suchraum, USS, für jedes der verschiedenen CORESETs individuell konfiguriert wird,
wobei die Benutzerausrüstung den CSS und/oder den USS, die für einen entsprechenden CORESET konfiguriert sind unter Verwendung eines für den entsprechenden CORESET konfigurierten Strahls überwacht.

4. Verfahren nach Anspruch 1, wobei der Sekundärstrahl durch eine MAC-Nachricht oder Downlink-Steuerinformationen, die von dem Primärstrahl empfangen werden, aktiviert/deaktiviert wird.

5. Benutzereinrichtung (110) zum Empfangen von Downlink-Steuerinformationen in einem drahtlosen Kommunikationssystem, wobei die Benutzereinrichtung (110) umfasst:
einen Empfänger (140); und
einen Prozessor (155), der konfiguriert ist, um:
über den Empfänger (140) Strahlkonfigurationsinformationen zur Konfiguration einer Vielzahl von Strahlen in mindestens einem Steuerressourcensatz, CORESET, zu empfangen;
einen Downlink-Steuerkanal, der von mindestens einem der Vielzahl von Strahlen in dem mindestens einen CORESET übertragen wird, blind zu detektieren; und
aus dem blind detektierten Downlink-Steuerkanal Downlink-Steuerinformationen zu erhalten,
wobei eine Gesamtzahl von Blinddetektionen, die von dem Prozessor ausgeführt werden können, der Vielzahl von Strahlen zugewiesen wird und der Prozessor eine Blinddetektion entsprechend der Anzahl von Blinddetektionen, die jedem der Strahlen zugewiesen sind, durchführt,
**dadurch gekennzeichnet, dass** die Vielzahl von Strahlen einen Primärstrahl und einen Sekundärstrahl umfasst,
wobei die Benutzerausrüstung versucht, Steuerkanalkandidaten zu erkennen, die einer ersten Aggregationsstufe unter einer Vielzahl von Aggregationsstufen auf dem Primärstrahl und dem Sekundärstrahl entsprechen,
wobei, basierend auf einer Gesamtzahl von Blinddetektionen für die Steuerkanalkandidaten, die der ersten Aggregationsstufe entsprechen N ist, eine Anzahl von Blinddetektionen, die an Steuerkanalkandidaten durchgeführt werden können, die der ersten Aggregationsstufe entsprechen, für den Primärstrahl K ist, und eine Anzahl von Blinddetektionen, die an Steuerkanalkandidaten durchgeführt werden können, die der ersten Aggregationsstufe entsprechen, für den Sekundärstrahl, N-k ist, und
wobei N und k ganze Zahlen größer als oder gleich 1 sind.

6. Benutzergerät (110) nach Anspruch 5, wobei die Viehlzahl von Strahlen in verschiedenen CORESETs konfiguriert ist.

7. Benutzergerät (110) nach Anspruch 6, wobei ein gemeinsamer Suchraum, CSS, und/oder ein benutzergerätespezifischer Suchraum, USS, für jeden der verschiedenen CORESETs individuell konfiguriert wird,
wobei die Benutzerausrüstung den CSS und/oder den USS überwacht, der für einen entsprechenden CORESET konfiguriert ist, unter Verwendung eines für das entsprechende CORESET konfigurierten Strahls.

8. Benutzergerät (110) nach Anspruch 5, wobei der Sekundärstrahl durch eine MAC-Nachricht oder Downlink-Steuerinformationen, die von dem Primärstrahl empfangen werden, aktiviert/deaktiviert wird.

## Revendications

1. Procédé de réception d'informations de contrôle descendant par un équipement utilisateur dans un système de communication sans fil, le procédé consistant à :
recevoir (605) des informations de configuration de faisceau pour configurer une pluralité de faisceaux dans au moins un ensemble de ressources de contrôle, CORESET, en provenance d'une station de base ;
détecter en aveugle (610) un canal de contrôle descendant transmis par au moins un faisceau de la pluralité de faisceaux dans ledit CORESET; et
acquérir (615) des informations de contrôle descendant à partir du canal de contrôle descendant détecté en aveugle,
dans lequel un nombre total de détections en aveugle exécutables par l'équipement utilisateur est attribué à la pluralité de faisceaux, et l'équipement utilisateur effectue la détection en aveugle conformément au nombre de détections en aveugle attribuées à chacun des faisceaux,
**caractérisé en ce que** la pluralité des faisceaux comprend un faisceau primaire et un faisceau secondaire,
dans lequel l'équipement utilisateur tente de détecter les candidats de canal de contrôle correspondant à un premier niveau d'agrégation parmi une pluralité de niveaux d'agrégation sur le faisceau primaire et le faisceau secondaire,
dans lequel, sur la base d'un nombre total de détections aveugles pour les candidats de canal de contrôle correspondant au premier niveau d'agrégation qui est N, un nombre de détections aveugles qui peuvent être effectuées sur des candidats de canal de contrôle correspondant au premier niveau d'agrégation pour le premier faisceau est K, et un nombre de détections aveugles qui peuvent être effectuées sur des candidats de canal de contrôle correspondant au premier niveau d'agrégation pour le second faisceau est N-k, et
N et k étant des nombres entiers supérieurs ou égaux à 1.

2. Procédé selon la revendication 1, dans lequel la pluralité de faisceaux est configuré dans des CORESET différents.

3. Procédé selon la revendication 2, dans lequel au moins l'un parmi un espace de recherche commun, CSS, et un espace de recherche spécifique à l'équipement utilisateur, USS, est configuré individuellement pour chacun des différents CORESET,
dans lequel l'équipement utilisateur surveille au moins l'un parmi le CSS et le USS configurés pour un CORESET correspondant à l'aide d'un faisceau configuré pour le CORESET correspondant.

4. Procédé selon la revendication 1, dans lequel le faisceau secondaire est activé/désactivé par un message MAC ou des informations de contrôle descendant reçues par le faisceau primaire.

5. Équipement utilisateur (110), UE, destiné à recevoir des informations de contrôle descendant dans un système de communication sans fil, l'équipement utilisateur (110) comprenant :
un récepteur (140) ; et
un processeur (155) configuré pour :
recevoir, par le récepteur (140) des informations de configuration de faisceau pour configurer une pluralité de faisceaux dans au moins un ensemble de ressources de contrôle, CORESET ;
détecter en aveugle un canal de contrôle descendant transmis par au moins un faisceau de la pluralité de faisceaux dans ledit CORESET ; et
acquérir des informations de contrôle descendant à partir du canal de contrôle descendant détecté en aveugle,
dans lequel un nombre total de détections en aveugle exécutables par le processeur est attribué à la pluralité de faisceaux, et le processeur effectue la détection en aveugle conformément au nombre de détections en aveugle attribuées à chacun des faisceaux,
**caractérisé en ce que** la pluralité des faisceaux comprend un faisceau primaire et un faisceau secondaire,
dans lequel l'équipement utilisateur tente de détecter les candidats de canal de contrôle correspondant à un premier niveau d'agrégation parmi une pluralité de niveaux d'agrégation sur le faisceau primaire et le faisceau secondaire,
dans lequel, sur la base d'un nombre total de détections aveugles pour les candidats de canal de contrôle correspondant au premier niveau d'agrégation qui est N, un nombre de détections aveugles qui peuvent être effectuées sur des candidats de canal de contrôle correspondant au premier niveau d'agrégation pour le premier faisceau est K, et un nombre de détections aveugles qui peuvent être effectuées sur des candidats de canal de contrôle correspondant au premier niveau d'agrégation pour le second faisceau est N-k, et
N et k étant des nombres entiers supérieurs ou égaux à 1.

6. Équipement utilisateur (110) selon la revendication 5, dans lequel la pluralité de faisceaux est configuré dans des CORESET différents.

7. Équipement utilisateur (110) selon la revendication 6, dans lequel au moins l'un parmi un espace de recherche commun, CSS, et un espace de recherche spécifique à l'équipement utilisateur, USS, est configuré individuellement pour chacun des différents CORESET,
dans lequel l'équipement utilisateur surveille au moins l'un parmi le CSS et le USS configurés pour un CORESET correspondant à l'aide d'un faisceau configuré pour le CORESET correspondant.

8. Équipement utilisateur (110) selon la revendication 5, dans lequel le faisceau secondaire est activé/désactivé par un message MAC ou des informations de contrôle descendant reçues par le faisceau primaire.
